Europäisches Patentamt

European Patent Office

Office européen des brevets

(19)

(11) Veröffentlichungsnummer: **0 177 076
B1**

(12) # EUROPÄISCHE PATENTSCHRIFT

(45) Veröffentlichungstag der Patentschrift:
**31.01.90**

(21) Anmeldenummer: **85201374.7**

(22) Anmeldetag: **30.08.85**

(51) Int. Cl.⁴: **H 04 N 9/64, H 04 N 9/66,
H 04 N 9/79**

(54) **Schaltungsanordnung zum Ableiten digitaler Farbsignale aus einem analogen Fernsehsignal.**

(30) Priorität: **03.09.84 DE 3432314**

(43) Veröffentlichungstag der Anmeldung:
**09.04.86 Patentblatt 86/15**

(45) Bekanntmachung des Hinweises auf die Patenterteilung:
**31.01.90 Patentblatt 90/5**

(84) Benannte Vertragsstaaten:
**DE FR GB**

(56) Entgegenhaltungen:
**DE-A- 3 232 316
DE-A- 3 238 700**

(73) Patentinhaber: **Philips Patentverwaltung GmbH,
Wendenstrasse 35 Postfach 10 51 49,
D-2000 Hamburg 1 (DE)**

(84) Benannte Vertragsstaaten: **DE**

(73) Patentinhaber: **N.V. Philips' Gloeilampenfabrieken,
Groenewoudseweg 1, NL-5621 BA Eindhoven (NL)**

(84) Benannte Vertragsstaaten: **FR GB**

(72) Erfinder: **Möring, Wilhelm, Clematisweg 12,
D-2000 Hamburg 54 (DE)**
Erfinder: **Ruprecht, Jürgen, Hamburger Kamp 48,
D-2000 Oststeinbek (DE)**
Erfinder: **Nillesen, Antonius H. H. J., de Bonkelaar 15,
NL-5527 GC Hapert (NL)**

(74) Vertreter: **Hartmann, Heinrich, Dipl.-Ing. et al, Philips
Patentverwaltung GmbH
Wendenstrasse 35 Postfach 10 51 49,
D-2000 Hamburg 1 (DE)**

## Beschreibung

Die Erfindung bezieht sich auf eine Schaltungsanordnung zum Ableiten digitaler Farbsignale aus einem analogen Fernsehsignal mit einem Analog-Digital-Umsetzer, der aus dem analogen Fernsehsignal ein digitales Fernsehsignal bildet, das eine Folge amplitudendiskreter Abtastwerte des analogen Fernsehsignals umfasst mit einer durch ein Taktsignal bestimmten Folgefrequenz, die einem Vielfachen der Zeilenfrequenz des Fernsehsignals entspricht, einem Demodulator, der durch Multiplikation des digitalen Fernsehsignals mit wenigstens einem digitalen Demodulationssignal die digitalen Farbsignale bildet, einem ersten Phasendetektor, der aus bestimmten digitalen Farbsignalen ein Farbphasensignal ableitet, das ein Mass für die Phasenlagen der digitalen Farbsignale relativ zu den Demodulationssignalen ist, einem ersten Phasenrechenwerk, das ein erstes Steuersignal abgibt, das aus einer Folge von Werten mit einer durch das Taktsignal bestimmten Folgefrequenz besteht und bei dem die Differenz jeweils zweier aufeinanderfolgender Werte durch das Farbphasensignal eingestellt wird, sowie einem Signalgenerator, der aus dem Steuersignal das bzw. die Demodulationssignale bildet, sowie eine Referenzschaltung, die eine Referenzsignalquelle, einen ein Referenzphasensignal erzeugenden Phasendetektor und ein zweites Phasenrechenwerk umfasst, das ein zweites aus einer Folge von Signalwerten bestehendes Steuersignal abgibt, wobei die Differenz jeweils aufeinanderfolgender Signalwerte durch das Referenzphasensignal eingestellt wird, und die dem ersten Phasenrechenwerk zum zusätzlichen Einstellen der Differenz zweier aufeinanderfolgender Werte des ersten Steuersignals das Referenzphasensignal zuleitet.

Eine derartige Schaltungsanordnung ist aus der europäischen Patentanmeldung EP-A 0 111 981 bekannt. Die dort beschriebene Schaltungsanordnung umfasst ein Phasenrechenwerk, dem ein Taktsignal, dessen Frequenz einem ganzzahligen Vielfachen der Zeilenfrequenz des Fernsehsignals entspricht, zugeführt wird und das ein Steuersignal abgibt. Dieses Steuersignal besteht aus einer Folge amplitudendiskreter Werte, die eine mit der Frequenz des Taktsignals übereinstimmende Folgefrequenz aufweisen. Die Werte des Steuersignals adressieren in einem Festwertspeicher (Signalgenerator) Abtastwerte eines sinusförmigen und eines kosinusförmigen Signals, die an je einem Ausgang mit einer Folgefrequenz entsprechend der Frequenz des Taktsignals abgegeben werden. Die Frequenz des Sinus- bzw. des Kosinus-Signals ist dabei gleich der Frequenz des Farbsynchronsignals aus dem Fernsehsignal. Das analoge Fernsehsignal wird in einem Analog-Digital-Umsetzer mit der Frequenz des Taktsignals abgetastet und damit in eine taktfrequente Folge amplitudendiskreter digitaler Abtastwerte umgesetzt. Dieses digitale Fernsehsignal wird in zwei Multiplizierern mit dem sinusförmigen bzw. dem kosinusförmigen Signal aus dem Festwertspeicher multipliziert. Die dadurch gebildeten digitalen Farbdifferenzsignale werden einem Phasendetektor zugeführt, der ein Farbphasensignal erzeugt. Dieses wird dem Phasenrechenwerk zum Korrigieren der Differenz zweier aufeinanderfolgender Werte des dem Signalgenerator zugeführten Steuersignals zugeleitet.

Die Festlegung der Taktfrequenz auf ein ganzzahliges Vielfaches der Zeilenfrequenz des Fernsehsignals hat gegenüber einer Festlegung der Taktfrequenz auf ein ganzzahliges Vielfaches der Frequenz des Farbsynchronsignals den Vorteil, dass die zeitliche Aufeinanderfolge der Abtastwerte des Fernsehsignals dessen Gliederung in Zeilen, Halbbilder und Vollbilder unmittelbar angepasst ist. Dadurch wird eine Verwendung digitaler Bildspeicheranordnungen wesentlich vereinfacht und die dabei erzielte Bildqualität verbessert. Auch wird die Verarbeitung von Fernsehsignalen unterschiedlicher Normen vereinfacht.

Ein Phasenrechenwerk der bekannten Art umfasst im einfachsten Fall einen Modulo-Addierer mit zwei Eingängen und einem Ausgang, der mit einem Eingang eines Registers verbunden ist, dessen Ausgang auf einen der Eingänge des Modulo-Addierers zurückgeschleift ist. Über den zweiten Eingang wird dem Modulo-Addierer ein digitales Signal zugeführt, dessen Wert auch als Inkrement bezeichnet wird. Dem Modulo-Addierer wird weiterhin ein Taktsignal zugeleitet. In jeder Periode dieses Taktsignals werden die Werte der an den Eingängen des Modulo-Addierers anliegenden Signale zueinander addiert und das so gebildete Summensignal über den Ausgang des Modulo-Addierers dem Register zugeführt und dort gespeichert. Der in einer Periode des Taktsignals im Register gespeicherte Wert wird dem ersten Eingang des Modulo-Addierers zugeführt und in der nächsten Periode des Taktsignals mit dem Inkrement zu einem neuen Summensignal verknüpft.

Ein derartiges Phasenrechenwerk stellt also im wesentlichen eine Akkumulationseinrichtung dar, die das Inkrement mit der Frequenz des Taktsignals aufakkumuliert. Das Inkrement bildet dabei die Differenz zwischen zwei aufeinanderfolgenden Werten des Summensignals und damit des am Ausgang des Registers abgegebenen Signals. Beim Akkumulieren wird somit das Summensignal von einem Anfangswert an mit der Frequenz des Taktsignals schrittweise erhöht, bis ein bestimmter Wert überschritten wird und die Akkumulation mit dem Restwert wieder von neuem beginnt. Die Folge der Werte des vom Phasenregelkreis am Ausgang des Registers abgegebenen Signals bildet somit ein zeitdiskretes periodisches Signal mit einer Frequenz, die von der Frequenz des Taktsignals sowie dem Inkrement abhängt. Damit ist es einerseits möglich, die Frequenz des vom Phasenrechenwerk abgegebenen Signals mit dem Inkrement einzustellen, andererseits machen sich jedoch Schwankungen in der Frequenz des Taktsignals, die insbesondere durch Schwankungen der Zeilenfrequenz des Fernsehsignals hervorgerufen werden können, nachteilig bemerkbar. Solche Schwankungen treten typischerweise in von Bildaufzeichnungsgeräten, beispielsweise Videorecordern, zugeführten Fernsehsignalen auf. Über die sinus- bzw. kosinusförmigen Signale, die als Demodulationssignale zum Demodulieren des Farbartsignals aus dem Fernsehsignal verwendet werden, entstehen Schwankungen in den Farbdifferenzsignalen, die zu unangenehmen Farbstörungen im Fernsehbild führen. Es zeigt sich, dass das Fernsehbild gegenüber den durch eine bestimmte Abweichung in der Frequenz des Taktsignals hervorgerufenen Farbstörungen wesentlich störempfindlicher ist als gegenüber der dieser Abweichung in der Frequenz des Taktsignals entsprechenden Abweichung der Zeilenfrequenz.

In der bekannten Schaltungsanordnung ist daher eine Referenzschaltung hinzugefügt worden, die ein Referenzphasensignal erzeugt, das dem ersten Phasenrechenwerk zugeführt wird, um Schwankungen der Frequenz des Taktsignals, die durch Schwankungen der Zeilenfrequenz bedingt sind, zu kompensieren. Die Referenzschaltung erzeugt ausserdem noch mit Hilfe des zweiten Phasenrechenwerkes das zeilenfrequente Taktsignal. Das Referenzphasensignal dient als Inkrement des zweiten Phasenrechenwerkes, das das Inkrement mit einer Frequenz eines von der Referenzsignalquelle erzeugten Referenztaktsignals aufakkumuliert. In einem dem zweiten Phasenrechenwerk nachgeschalteten ein aus einem Sägezahnsignal ein Rechtecksignal bildenden Konverter, der wenigstens einen D/A-Umsetzer umfasst, wird das Taktsignal gebildet, das auch über einen Frequenzteiler dem zweiten Phasendetektor zugeführt wird. Der zweite Phasendetektor, dem ausserdem noch Zeilensynchronimpulse zugeleitet werden, erzeugt daraus das Referenzphasensignal. Da die Frequenz der Referenzsignalquelle viel grösser als die Frequenz des Taktsignals ist, werden für die mit der Frequenz des Referenztaktsignals arbeitenden Stufen schnelle und daher aufwendige Digitalbausteine und auch ein schneller D/A-Umsetzer benötigt.

Die Erfindung hat die Aufgabe, eine Schaltungsanordnung der eingangs genannten Art zu schaffen, die mit geringerem Aufwand bei schwankender Frequenz des Taktsignals eine störungsfreie Demodulation des Farbartsignals im Fernsehsignal gewährleistet.

Diese Aufgabe wird bei einer Schaltungsanordnung der eingangs genannten Art erfindungsgemäss dadurch gelöst, dass die Folge von Signalwerten des zweiten Steuersignals des zweiten Phasenrechenwerkes aus einer vom Taktsignal bestimmten Folgefrequenz besteht und dass der zweite Phasendetektor das zweite Steuersignal mit dem von der Referenzsignalquelle erzeugten Referenzsignal vergleicht und daraus das Referenzphasensignal bildet.

Das Referenzphasensignal, das zusammen mit dem Farbphasensignal dem ersten Phasenrechenwerk als Inkrement zugeleitet wird, wird auch dem zweiten Phasenrechenwerk als Inkrement zugeführt, wodurch sich insgesamt eine Anordnung aus zwei miteinander verkoppelten Phasenregelschleifen ergibt. Die Phasenregelschleife aus zweitem Phasenrechenwerk, Referenzsignalquelle und zweitem Phasendetektor regelt durch Schwankungen in der Frequenz des Taktsignals hervorgerufene Phasenverschiebungen des ersten Steuersignals durch Veränderung des Referenzphasensignals sehr schnell aus, wodurch auch die Einflüsse des schwankenden Taktsignals auf das erste Phasenrechenwerk sehr schnell ausgeglichen werden, ohne dass die Phasenregelschleife, der das erste Phasenrechenwerk angehört, eine entsprechend hohe Regelgeschwindigkeit aufweisen muss. Die angegebene Anordnung aus zwei miteinander verkoppelten digitalen Phasenregelschleifen ist somit gegen Schwankungen der Frequenz des Taktsignals stabilisiert. Diese Stabilisierung wird bestimmt durch die Stabilität der Frequenz des Referenzsignals, wozu die Referenzsignalquelle vorzugsweise einen Schwingquarz umfasst, aus dessen Schwingungen das Referenzsignal abgeleitet wird. Die gesamte Schaltungsanordnung wird also von einem Taktsignalgenerator versorgt und die Referenzschaltung besteht aus einfach zu realisierenden digitalen Bauelementen.

Im Prinzip kann bei der erfindungsgemässen Schaltungsanordnung die Frequenz des Taktsignals ein rationalzahliges (gebrochenes) Vielfaches der Zeilenfrequenz des Fernsehsignals sein; es ist vorzugsweise ein ganzzahliges Vielfaches.

Nach einer Weiterbildung der Erfindung wird das Referenzphasensignal vor dem Zuleiten zum ersten Phasenrechenwerk dem Farbphasensignal additiv überlagert. diese Überlagerung wird insbesondere in einem dem ersten Phasenrechenwerk vorgeschalteten, von ihm getrennten Addierer vorgenommen, so dass dem ersten Phasenrechenwerk nur ein Signal zum Einstellen der Differenz jeweils zweier aufeinander foglender Werte des ersten Steuersignals zugeleitet wird.

Nach einer weiteren Fortbildung der Erfindung, in der das Taktsignal in einem Taktsignal-Phasenregelkreis aus einem Taktoszillator abgeleitet wird, dessen Schwingfrequenz durch ein aus dem Vergleich eines in dem analogen Fernsehsignal enthaltenen Zeilensynchronsignals mit dem frequenzgeteilten Taktsignal gewonnenes Frequenzsteuersignal bestimmt wird, wird das Frequenzsteuersignal dem mindestens dem ersten Phasenrechenwerk zugeführten Referenzphasensignal additiv überlagert. Das Frequenzsteuersignal enthält nämlich bereits eine Information über die Schwankungen des Zeilensynchronsignals und damit über die bevorstehenden Schwankungen in der Frequenz des Taktsignals, noch bevor diese vom zweiten Phasendetektor erfasst und vom zweiten Phasenrechenwerk ausgeregelt werden. Diese Information über die Schwankungen der Frequenz des Taktsignals wird nun nach der angegebenen Weiterbildung der Erfindung im Sinne einer groben Ausregelung der auftretenden Schwankungen in der Frequenz des Taktsignals dem ersten und dem zweiten Phasenrechenwerk als Inkrement zugeleitet, und zwar durch additive Überlagerung mit dem Referenzphasensignal. Im Anschluss an diese grobe Ausregelung erfolgt dann die angegebene, genaue Regelung durch die verkoppelten Phasenregelkreise.

Nach einer weiteren Ausgestaltung der Erfindung wird das Referenzphasensignal dem ersten und dem zweiten Phasenrechenwerk über einen Referenzphasensignalregler zugeleitet. Durch Einfügung eines derartigen Referenzphasensignalreglers in den Phasenregelkreis wird dessen Regelverhalten, beispielsweise die Regelgeschwindigkeit, in gewünschter Weise beeinflussbar. Im vorliegenden Fall wird bevorzugt ein Referenzphasensignalregler mit einer hohen Regelgeschwindigkeit gewählt.

Nach einer weiteren Ausgestaltung der Erfindung umfasst der Referenzphasensignalregler eine Proportional-Integral-Regelstufe, auch kurz als PI-Regler bezeichnet. Mit einem derartigen PI-Regler ist einerseits eine schnelle und andererseits eine genaue Regelung möglich.

Nach einer anderen Fortbildung der Erfindung umfasst der Referenzphasenregler eine Kettenschaltung von wenigstens zwei Integratoren, denen wenigstens ein Proportionalzweig parallelgeschaltet ist. Die Anordnung aus zweitem Phasenrechenwerk, zweitem Phasendetektor und Referenzphasensignalregler bildet dann einen Phasenregelkreis wenigstens dritten Grades. Mit einem derartigen Referenzphasensignalregler wird der Regelfehler des Phasenregelkreises bei bestimmten Verläufen von Änderungen der Frequenz des Taktsignals, insbesondere bei zeitlich linearen Änderungen, verringert. Insbesondere kann es bei einer Ausbildung des Referenzphasensignalreglers mit nur einem PI-Regler und einer kontinuierlichen, rampenförmigen Veränderungen der Frequenz des Taktsignals zu einem konstanten Regelfehler kommen, durch den dann dem ersten Phasenrechenwerk während dieser rampenförmigen Veränderung ein fehlerhaftes Inkrement zugeführt wird. Derartige Regelfehler werden jedoch mit einem Phasenregelkreis dritten Grades vermieden.

Nach einer weiteren Ausgestaltung der Erfindung wird das Referenzphasensignal einem Eingang einer Verzerrungsstufe und deren Ausgangssignal dem Referenzphasensignalregler zugeführt und formt die Verzerrungsstufe das Referenzphasensignal derart um, dass grosse Werte des Referenzphasensignals gemäss einer nichtlinearen Zuordnung zwischen Werten am Eingang und am Ausgang überproportional gegenüber kleinen Werten vergrössert werden. Der Phasenregelkreis weist dann bei geringen Abweichungen zwischen der Frequenz und/oder Phase des Referenzsignals und des zweiten Steuersignals eine geringe Regelverstärkung auf, d.h., dass kleine Abweichungen nur zu einem kleinen Wert für das Referenzphasensignal führen. Der Phasenregelkreis weist dann auch eine kleine Regelgeschwindigkeit und eine geringe Bandbreite, d.h. eine gute Rauschunterdrückung bei genauer, langsamer Ausregelung kleiner Regelfehler auf. Durch die überproportionale Vergrösserung des Referenzphasensignals am Ausgang der Verzerrungsstufe gegenüber dem Signal an ihrem Eingang bei grösseren Abweichungen der Frequenzen und/oder Phasen des Referenzsignals und des zweiten Steuersignals wird aber erreicht, dass der Phasenregelkreis beim Auftreten grosser Störungen eine hohe Regelverstärkung und damit eine grosse Regelgeschwindigkeit erhält. Er kann damit grosse Phasen- und/oder Frequenzabweichungen schnell ausregeln. Die damit verbundene grössere Bandbreite und dadurch schlechtere Rauschunterdrückung des Phasenregelkreises wirkt sich nicht nachteilig aus, da bei ihrem Auftreten der Kreis ohnehin nicht eingeschwungen ist.

Nach einer weiteren Fortbildung der Erfindung umfasst die Verzerrungsstufe eine Speicheranordnung, die zu jedem Wert des Referenzphasensignals einen Wert am Ausgang der Verzerrungsstufe bildet und diesen dem Referenzphasensignalregler zuleitet. Eine derartige Speicheranordnung kann als Festwertspeicher ausgebildet sein, dessen einzelne Speicherplätze durch die Werte des Signals am Eingang der Verzerrungsstufe adressiert werden und der daraufhin die in den adressierten Speicherplätzen gespeicherten Werte dem Ausgang der Verzerrungsstufe zuleitet. Auf diese Weise sind beliebige Zuordnungen zwischen den Werten am Eingang und den Werten am Ausgang der Verzerrungsstufe erreichbar. Gegebenenfalls können mehrere Speicheranordnungen mit unterschiedlichen Zuordnungen wahlweise verwendet werden und beispielsweise durch Umschaltvorrichtungen wahlweise in den Phasenregelkreis geschaltet werden.

Nach einer anderen Weiterbildung der Erfindung umfasst die Verzerrungsstufe eine Quantisierstufe, die Werte des Referenzphasensignals mit einem oder mehreren Schwellenwerten vergleicht, sowie eine von der Quantisierstufe gesteuerte Auswahlschaltung, die ihrem Eingang zugeführte Werte des Referenzphasensignals in einzelne, durch den oder die Schwellenwerte begrenzten Wertebereichen gemäss einer linearen Zuordnung in Werte umsetzt, die vom Ausgang der Verzerrungsstufe dem Referenzphasensignalregler zugeführt werden. Mit einer derartigen Anordnung wird eine bereichsweise lineare Zuordnung der Werte am Eingang und am Ausgang der Verzerrungsstufe erhalten. Es kann dann für kleine Phasen- bzw. Frequenzabweichungen eine kleine Regelverstärkung und für grosse Phasen- bzw. Frequenzabweichungen eine grössere Regelverstärkung eingestellt werden. Gegenüber einer adressierbaren Speicheranordnung lässt sich damit insbesondere bei einer geringen Anzahl von Schwellenwerten eine Verringerung des Schaltungsaufwandes erzielen.

Nach einer anderen Fortbildung der Erfindung gibt die Referenzsignalquelle ein rechteckförmiges Signal ab, das mit einem vom Taktsignal gesteuerten Register abgetastet wird. Vorzugsweise ist dieses Register als 1-Bit-Register ausgebildet, das die beiden Signalwerte des rechteckförmigen Signals speichert.

Nach einer anderen Ausgestaltung der Erfindung umfasst die Referenzsignalquelle einen Oszillator, der ein Signal abgibt mit einer Frequenz, die einem ganzzahligen Vielfachen der Frequenz des Referenzsignals entspricht, sowie eine Umsetzschaltung, die das Signal des Oszillators in ein amplitudendiskretes, mit der Frequenz des Referenzsignals periodisches Signal umsetzt. Eine derartige Umsetzschaltung ist beispielsweise als Zähler oder als Analog-Digital-Umsetzer ausgebildet. Dem zweiten Phasendetektor werden dann mit einer der Frequenz des Taktsignals entsprechenden Folgefrequenz Werte des zweiten Steuersignals und des Referenzsignals zugeleitet. Wenn insbesondere die Frequenz des vom Oszillator abgegebenen Signals wesentlich höher ist als die des Referenzsignals, wird durch die Umsetzschaltung eine genaue Quantisierung des Referenzsignals vorgenommen, wodurch im zweiten Phasendetektor ein genauer Phasenvergleich möglich ist. In dem Phasenregelkreis, in dem der zweite Phasendetektor angeordnet ist, tritt dann nur ein geringes Quantisierungsgeräusch auf, das durch das amplitudendiskrete Referenzsignal hervorgerufen wird. Der Phasenregelkreis kann dann, wie oben beschrieben, eine grosse Bandbreite, d.h. eine hohe Regelgeschwindigkeit aufweisen, ohne dass wesentliches Rauschen im Kreis auftritt.

Nach einer anderen Ausgestaltung der Erfindung ist die Frequenz des Referenzsignals wenigstens nahezu gleich der Frequenz des Farbsynchronsignals des Fernsehsignals. Eine derartige Wahl der Frequenz des Referenzsignals ist zweckmässig, da das vom ersten Phasenrechenwerk abgegebene erste Steuersignal die Frequenz des Farbsynchronsignals aufweist. Wenn die Frequenz des Referenzsignals mit der des Farbsynchronsignals wenistens nahezu übereinstimmt, wird insgesamt eine besonders einfache Schaltungsanordnung erhalten.

Einige Ausführungsbeispiele der Erfindung sind in der Zeichnung dargestellt und werden im nachfolgenden näher beschrieben. Es zeigen

Fig. 1 ein Blockschaltbild eines Ausführungsbeispiels,

Fig. 2 ein etwas detaillierteres Blockschaltbild eines Beispiels für ein Phasenrechenwerk aus der Schaltungsanordnung nach Fig. 1,

Fig. 3 ein etwas detaillierteres Blockschaltbild einer Ausführungsform für eine Proportional-Integral-Regelstufe in der Schaltungsanordnung nach Fig. 1,

Fig. 4 ein Blockschaltbild einer weiteren Ausführungsform,

Fig. 5 ein etwas detaillierteres Blockschaltbild eines Ausführungsbeispiels für eine Referenzsignalquelle sowie einen zweiten Phasendetektor aus der Schaltungsanordnung nach Fig. 4,

Fig. 6 eine Abwandlung eines Teils der Schaltungsanordnung nach Fig. 5,

Fig. 7 ein etwas detaillierteres Blockschaltbild einer Verzerrungsstufe aus der Schaltungsanordnung nach Fig. 4.

Fig. 8 einen Referenzphasensignalregler in Abwandlung von Fig. 4.

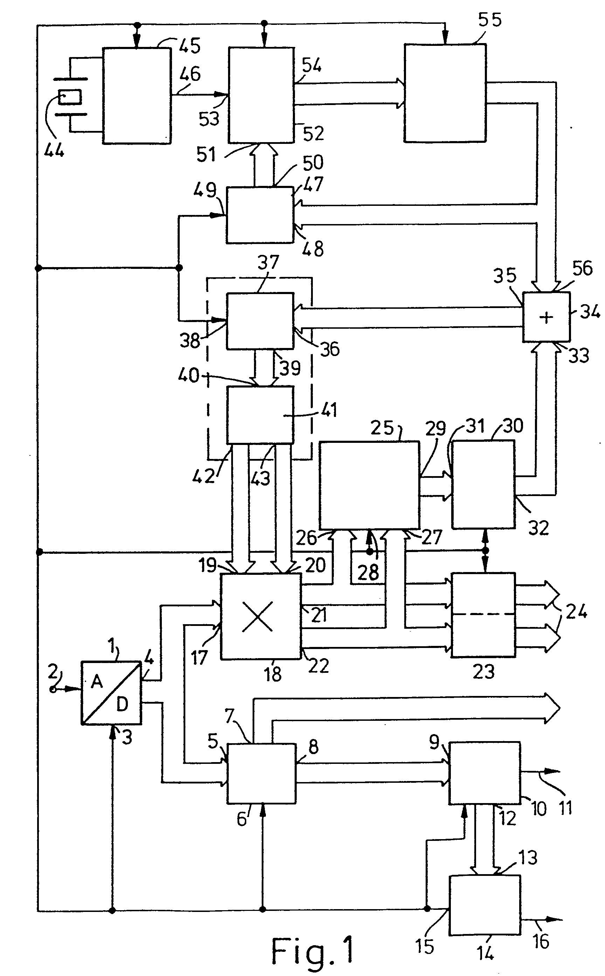

In der Schaltungsanordnung nach Fig. 1 ist mit 1 ein Analog-Digital-Umsetzer bezeichnet, dem an einem Eingang 2 ein analoges Fernsehsignal zugeführt wird, das ein analoges Leuchtdichtesignal, ein analoges Farbartsignal sowie Vertikal- und Horizontal-Synchronimpulse enthält. An einem Takteingang 3 wird dem Analog-Digital-Umsetzer 1 ein periodisches Taktsignal zugeleitet. In jeder Periode dieses Taksignals wird im Analog-Digital-Umsetzer 1 aus dem analogen Fernsehsignal am Eingang 2 ein amplitudendiskreter Abtastwert abgeleitet und an einem Ausgang 4 vorzugsweise in paralleler Form abgegeben.

Das digitale Fernsehsignal wird zum einen einem Eingang 4 einer Filterstufe 6 zugeleitet, die daraus in einem ersten Schritt durch Unterdrükken des Farbartsignals ein digitales Leuchtdichtesignal gewinnt und an einem Leuchtdichtesignalausgang 7 abgibt sowie in einem zweiten Schritt durch Tiefpassfilterung ein Signal gewinnt, das im wesentliche noch die Synchronimpulse und niederfrequente Anteile des Leuchtdichtesignals enthält und das an einem Synchronimpulsausgang 8 abgegeben wird. Von dort gelangt diese Signal zum Eingang 9 einer Synchronabtrennstufe 10, die daraus die Vertikalsynchronimpulse abtrennt und an einem Vertikalsynchronausgang 11 abgibt. Die Horizontal-Synchronimpulse werden von der Synchronabtrennstufe 10 über einen Horizontalsynchronausgang 12 einem Synchronisiereingang 13 eines Taktsignalgenerators 14 zugeführt. Der Taktsignalgenerator 14 gibt an einem Taktsignalausgang 15 das Taktsignal ab, das dem Takteingang 3 des Analog-Digital-Umsetzers 1 zugeführt wird. Der Taktsignalgenerator 14 liefert an einem Zeilensynchronausgang 16 Zeilensynchronimpulse, die aus den Horizontal-Synchronimpulsen abgeleitet sind.

Das vom Taktsignalgenerator 14 erzeugte Taktsignal wird durch die dem Synchronisiereingang 13 zugeführten Horizontal-Synchronimpulse synchronisiert und weist eine Frequenz auf, die einem ganzzahligen Vielfachen der Wiederholungsfrequenz der Horizontal-Synchronimpulse entspricht. Die Frequenz des Taktsignals ist daher mit der Wiederholungsfrequenz der Horizontal-Synchronimpulse verbunden und schwankt mit den Veränderungen dieser Wiederholungsfrequenz, so dass beispielsweise Frequenzabweichungen in dieser Wiederholungsfrequenz oder Abweichungen in der Phasenlage einzelner Horizontal-Synchronimpulse, wie sie insbesondere in einem von einem Bildaufzeichungsgerät, insbesondere einem Videorecorder, zugeführten, analogen Fernsehsignal auftreten, zu Veränderungen der Frequenz des Taktsignals führen.

Das digitale Fernsehsignal vom Ausgang 4 des Analog-Digital-Umsetzers 1 wird weiterhin einem Fernsehsignaleingang 17 eines Demodulators 18 zugeführt, dem an einem ersten und einem zweiten Demodulationssignaleingang 19 und 20 ausserdem ein erstes und ein zweites Demodulationssignal zugeleitet werden. Die Demodulationssignale bestehen aus je einer Folge digitaler Abtastwerte mit einer Folgefrequenz, die gleich der Frequenz des Taktsignals ist, und stellen sinusförmige Schwingungen mit der Frequenz des im Farbartsignal enthaltenen Farbsynchronsignals (Burst) und einer gegenseitigen Phasenverschiebung von 90° dar, so dass beispielsweise das erste Demodulationssignal eine Sinusfunktion und das zweite Demodulationssignal eine Kosinusfunktion darstellt. Im Demodulator 18 wird jeder Abtastwert des digitalen Fernsehsignals vom Fernsehsignaleingang 17 mit je einem Abtastwert des ersten und des zweiten Demodulationssignals multipliziert. Die Folgen der mit der Taktfrequenz auftretenden Produkte werden als demodulierte digitale Farbdifferenzsignale an einem ersten bzw. einem zweiten Farbdifferenzsignalausgang 21 bzw. 22 abgegeben. Sie werden einerseits über ein Farbdifferenz-Tiefpassfilter 23 mit je einem Kanal für jedes Farbdifferenzsignal zum Abtrennen hochfrequenter, vom Demodulator 18 gebildeter Mischprodukte Ausgängen 24 und andererseits Signaleingängen 26, 27 eines ersten Phasendetektors 25 zugeführt. Dem ersten Phasendetektor 25 wird weiterhin das Taktsignal an einem Taktsignaleingang 28 zugeleitet.

Der erste Phasendetektor 25 tastet die ihm an den Signaleingängen 26 und 27 zugeführten, digitalen Farbdifferenzsignale jeweils zum Zeitpunkt des Auftretens des Farbsynchronsignals im Fernsehsignal ab und erfasst so über den ersten Signaleingang 26 das mit dem ersten Demodulationssignal und am zweiten Signaleingang 27 das mit dem zweiten Demodulationssignal demodulierte, d. h. multiplizierte Farbsynchronsignal. Beispielsweise wird bei einem nach der PAL-Norm übertragenen Fernsehsignal im Anschluss an jeden Horizontal-Synchronimpuls ein Schwingungszug des Farbsynchronsignals übertragen, und entsprechend werden in diesem Zeitintervall die demodulierten Farbsynchronsignale vom ersten Phasendetektor 25 detektiert. Der erste Phasendetektor 25 bildet daraus ein der Phasenlage des Farbsynchronsignals zu den Demodulationssignalen entsprechendes Farbphasensignal und gibt dieses über einen Farbphasensignalausgang 29 an einen Farbphasensignalregler 30 ab, der bevorzugt in der Form einer Proportional-Integral-Regelstufe als digitales Filter aufgebaut ist und das seinem Eingang 31 zugeführte Farbphasensignal entsprechend seiner Filtercharakteristik über einen Ausgang 32 einem ersten Eingang 33 eines ersten Addierers 34 zuleitet. Vom Ausgang 35 des ersten Addierers 34 wird das Farbphasensignal als Teil eines Inkrements einem Inkrementeingang 36 eines ersten Phasenrechenwerkes 37 zugeleitet, dem weiterhin an einem Takteingang 38 das Taktsignal zugeführt wird. An einem Steuersignalausgang 39 gibt das erste Phasenrechenwerk 37 ein erstes Steuersignal aus einer Folge von Werten ab mit einer der Frequenz des Taktsignals entsprechenden Folgefrequenz und einer durch das dem Inkrementeingang 36 zugeführte Inkrement bestimmten Differenz aufeinanderfolgende Werte.

Das erste Steuersignal wird dem Eingang 40 eines Signalgenerators 41 zugeführt. Durch jeden möglichen Wert des ersten Steuersignals wird im Signalgenerator 41 je ein Wert des ersten und des zweiten Demodulationssignals ausgewählt und über einen ersten bzw. einen zweiten Demodulationssignalausgang 42 bzw. 43 abgegeben und dem ersten bzw. zweiten Demodulationssignaleingang 19 bzw. 20 des Demodulators 18 zugeleitet. Der Signalgenerator 41 umfasst vorzugsweise einen Festwertspeicher, in dem die Werte des ersten und des zweiten Demodulationssignals gespeichert sind, die durch die Werte des ersten Steuersignals am Eingang 40 adressiert werden. Demodulator 18, erster Phasendetektor 25, Farbphasensignalregler 30, erster Addierer 34 sowie die einen digitalen Oszillator bildende Kombination aus erstem Phasenrechenwerk 37 und Signalgenerator 41 bilden zusammen einen digitalen Phasenregelkreis, dessen Signalfrequenz – die Frequenz der Demodulationssignale – durch das Inkrement am Inkrementeingang 36 bestimmt wird.

Die Schaltungsanordnung nach Fig. 1 umfasst weiterhin eine durch einen Schwingquarz 44 gesteuerte Referenzsignalquelle 45, der vom Taktsignalausgang 15 das Taktsignal zugeleitet wird und die an einem Ausgang 46 als Referenzsignal ein rechteckförmiges Signal mit einer Frequenz abgibt, die wenigstens nahezu gleich der Frequenz des Farbsynchronsignals im Fernsehsignal ist. Dieses rechteckförmige Signal besteht aus einer taktfrequenten Folge von vorzugsweise zwei verschiedenen Signalwerten, die derart aufeinander folgen, dass ein Signal der gewünschten Frequenz entsteht. Beispielsweise wird dazu vom Schwingquarz 44 ein analoges Signal mit rechteckförmigem Verlauf und der Frequenz des rechteckförmigen Signals abgeleitet und dessen Wert mit dem Taktsignal abgetastet. Das rechteckförmige Signal kann mit einem Bit dargestellt werden.

Weiterhin ist ein zweites Phasenrechenwerk 47 vorgesehen, das in Aufbau und Funktionsweise dem ersten Phasenrechenwerk 37 entspricht. Es weist entsprechend einen Inkrementeingang 48, einen Takteingang 49 sowie einen Steuersignalausgang 50 auf.

Das zweite Phasenrechenwerk 47 gibt an seinem Steuersignalausgang 50 ein zweites Steuersignal ab, das einem Steuersignaleingang 51 eines zweiten Phasendetektors 52 zugeführt wird. Dem zweiten Phasendetektor 52 wird an einem Referenzsignaleingang 53 das Referenzsignal vom Ausgang 46 der Referenzsignalquelle 45 zugeleitet und in Frequenz and Phase mit dem zweiten Steuersignal verglichen. Dazu werden die Differenzen aus den Werten des Referenzsignals und den zugehörigen Werten des zweiten Steuersignals gebildet, die ein Mass für Frequenz- bzw. Phasenabweichungen darstellen, und ein daraus gebildetes Referenzphasensignal wird an einem Ausgang 54 des zweiten Phasendetektors 52 abgegeben und über einen Referenzphasensignalregler 55 einerseits als Inkrement dem Inkrementeingang 48 des zweiten Phasenrechenwerks 47 und andererseits einem zweiten Eingang 56 des ersten Addierers 34 zugeleitet. Der Referenzphasensignalregler 55 ist vorzugsweise ähnlich dem Farbphasensignalregler 30 als Proportional-Integral-Regelstufe aufgebaut. Das von ihm an den Inkrementeingang 48 des zweiten Phasenrechenwerks 47 abgegebene Inkrement wird im ersten Addierer 34 dem Farbphasensignal additiv überlagert und mit ihm gemeinsam als Inkrement dem ersten Phasenrechenwerk 37 zugeführt. Das Inkrement vom zweiten Phasendetektor 52 bzw. vom Referenzphasensignalregler 55 schwankt umgekehrt proportional zu den Schwankungen der Frequenz des Taktsignals. Aus diesem Anteil des Inkrements am Inkrementeingang 36 des ersten Phasenrechenwerks 37 entsteht mit dem Takteingang 38 des ersten Phasenrechenwerks 37 zugeführten Taktsignal unter der Annahme, dass das Farbphasensignal vom Farbphasensignalregler 30 am ersten Eingang 33 des ersten Addierers 34 keinen Beitrag liefert, am Steuersignalausgang 39 des ersten Phasenrechenwerks 37 ein erstes Steuersignal, das unmittelbar dem Referenzsignal vom Ausgang 46 der Referenzsignalquelle 45 folgt. Durch das Farbphasensignal wird dem Inkrement am Inkrementeingang 36 ein Anteil hinzugefügt, der im wesentlichen der Abweichung der Frequenzen bzw. Phasen des Referenzsignals und des Farbsynchronsignals aus dem Fernsehsignal entspricht.

Der Farbphasensignalregler 30 weist vorzugsweise eine Tiefpasscharakteristik mit sehr niedriger Grenzfrequenz auf, so dass der zugehörige Phasenregelkreis sehr frequenzstabil ist, d.h., dass er Schwankungen der Frequenz des Farbsynchronsignals nur sehr langsam nachgeführt wird. Demgegenüber ermöglicht der Referenzphasensignalregler 55 auch schnelle Frequenz- bzw. Phasenänderungen in dem ihn umfassenden Phasenregelkreis. Damit ist dieser Phasenregelkreis in der Lage, schnelle Schwankungen in der Frequenz bzw. Phase des Taktsignals auszugleichen, beispielsweise in einem von einem Videorecorder eingespeisten Fernsehsignal nach einem Wechsel des Wiedergabekopfes. Derartige Kopfwechsel werden in der Regel am Übergang zwischen zwei aufeinander folgenden Bildern im Fernsehsignal vorgenommen. Die von diesen Kopfwechseln ausgehenden Störungen werden durch die beschriebene Schaltungsanordnung noch vor Auftreten der ersten auf einer Bildwiedergabeanordnung dargestellten Fernsehbildzeile im Fernsehsignal ausgeregelt.

Das Taktsignal wird ausser dem Analog-Digital-Umsetzer 1, dem ersten Phasendetektor 25 und den Phasenrechenwerken 37, 47 wenigstens noch der Filterstufe 6, der Synchronabtrennstufe 10, dem Farbdifferenz-Tiefpassfilter 23, dem Farbphasensignalregler 30 sowie dem zweiten Phasendetektor 52 und dem Referenzphasensignalregler 55 zum Synchronisieren der Funktionsabläufe zugeführt.

Die Ausgänge 7 für das digitale Leuchtdichtesignal, 11 für die Vertikal-Synchronimpulse, 16 für die Zeilensynchronimpulse und 24 für die Farbdifferenzsignale in der Schaltungsanordnung nach Fig. 1 sind beispielsweise mit einer nicht dargestellten Fernsehbildwiedergabeanordnung verbunden.

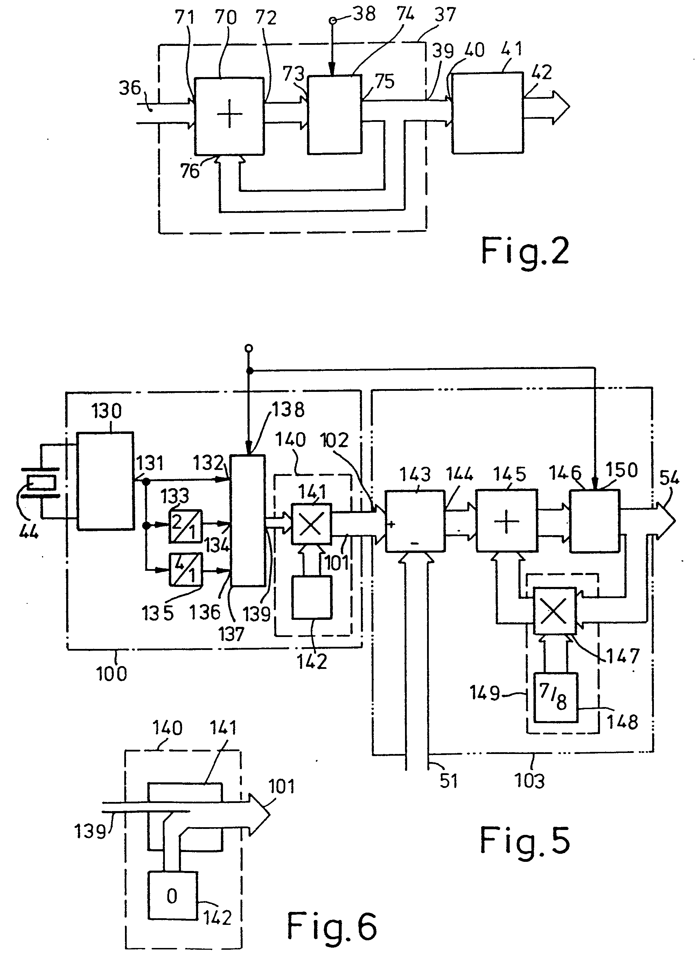

Fig. 2 zeigt ein etwas detaillierteres Schaltbild für den Aufbau eines in der Schaltungsanordnung nach Fig. 1 verwendeten Phasenrechenwerks am Beispiel des ersten Phasenrechenwerks 37. Das Inkrement wird vom Inkrementeingang 36 einem ersten Eingang 71 eines Modulo-Addierers 70 zugeführt, dessen Ausgang 72 mit einem Eingang 73 eines Registers 74 verbunden ist, dessen Ausgang 75, der das erste Steuersignal liefert, mit dem Steuersignalausgang 39 des ersten Phasenrechenwerks 37 und mit einem zweiten Eingang 76 des Modulo-Addierers 70 verbunden ist. Dem Register wird ferner das Taktsignal vom Takteingang 38 zugeleitet derart, dass in jeder Periode des Taktsignals das vom Ausgang 72 des Modulo-Addierers 70 dem Eingang 73 zugeführte Signal im Register 74 gespeichert wird und an dessen Ausgang 75 zur Verfügung steht. In jeder Periode des Taktsignals wird somit im Modulo-Addierer 70 der im Register 74 gespeicherte Wert zu dem Inkrement vom ersten Eingang 71 hinzuaddiert, d.h. es werden die über den Inkrementeingang 36 zugeführten Inkremente im Takt des Taktsignals und beginnend mit beispielsweise dem Wert Null aufakkumuliert. Bei einem Überlauf im Modulo-Addierer 70, d.h. wenn die Summe der Werte an den Eingängen 71 und 76 den grössten darstellbaren Wert am Ausgang 72 überschreitet, erscheint dort nur die Differenz zwischen diesem Summenwert und dem grössten darstellbaren Wert. Das Phasenrechenwerk 37 beginnt dann, die Inkremente am Inkrementeingang 36 von neuem aufzuakkumulieren.

Dem ersten Phasenrechenwerk 37 ist, wie schon in der Fig. 1 dargestellt, am Steuersignalausgang 39 der Signalgenerator 41 nachgeschaltet, der zusammen mit dem Phasenrechenwerk 37 einen digitalen Oszillator bildet.

Fig. 3 zeigt ein Beispiel für eine Ausführungsform des Referenzphasensignalreglers 55 als Proportional-Integral-Regelstufe, die einen Proportionalzweig mit einem ersten Multiplizierer 80 und parallel dazu einen Integralzweig mit einer einen Addierer 81 und ein Register 82 umfassenden Akkumulationsvorrichtung und einem dieser Akkumulationsvorrichtung nachgeschalteten zweiten Multiplizierer 83 enthält. Dem Register 82 wird an einem Takteingang 84 das Taktsignal zugeleitet. Die Multiplizierer 80, 83 weisen je einen Eingang 85, 86 auf, über die dem Referenzphasensignalregler 55 Proportionalitätsfaktoren zum Einstellen der Charakteristik, d.h. der Regelverstärkung und der Zeitkonstanten und damit letztlich der Regelgeschwindigkeit zugeführt werden. Diese Proportionalitätsfaktoren können fest vorgegeben, jedoch auch einstellbar sein. Über einen weiteren Addierer 87 werden die Signale aus dem Proportionalzweig und dem Integralzweig summiert.

Fig. 4 zeigt als weitere Ausführungsform der erfindungsgemässen Schaltungsanordnung eine Abwandlung der Anordnung nach Fig. 1, wobei Teile, die mit dieser Schaltungsanordnung identisch sind, mit gleichen Bezugszeichen versehen und anhand Fig. 1 beschrieben sind.

Bei der Schaltungsanordnung nach Fig. 4 wird aus dem Taktsignalgenerator 14 über einen weiteren Ausgang 90 ein Frequenzsteuersignal abgeleitet und über eine Umformstufe 91 einem ersten Eingang 92 eines zweiten Addierers 93 zugeführt. Beispielsweise umfasst der Taktsignalgenerator 14 einen Taktsignal-Phasenregelkreis mit einem Taktoszillator, der das Taktsignal abgibt, einem Frequenzteiler, der die Frequenz des Taktsignals auf die Frequenz eines im Fernsehsignal enthaltenen Zeilensynchronsignals teilt, und einem das frequenzgeteilte Taktsignal mit dem Zeilensynchronsignal hinsichtlich Frequenz und Phase vergleichenden Phasendetektor, der das Frequenzsignal bildet und damit den Taktoszillator steuert. Das Frequenzsteuersignal enthält eine unmittelbare Information über die Frequenz des Taktsignals.

Der zweite Addierer 93 ist derart in den Signalweg für das Referenzphasensignal eingefügt, dass seinem zweiten Eingang 94 das Referenzphasensignal zugeführt wird und von seinem Ausgang 95 die Summe aus dem Referenzphasensignal und dem Frequenzsteuersignal dem Inkrementeingang 48 des zweiten Phasenrechenwerks 47 und dem zweiten Eingang 56 des ersten Addierers 34 zugeleitet wird. Die Umformstufe 91 formt dabei das Frequenzsteuersignal beispielsweise in seinem Wert derart um, dass es den Werten des Referenzphasensignals und des Farbphasensignals angepasst ist. Darüber hinaus kann die Umformstufe 91 auch eine dynamische Anpassung, beispielsweise eine Tiefpassfilterung oder eine Verzögerung, des die Frequenz des Taktsignals bestimmenden Signals durchführen. Damit lässt sich die Wirkungsweise der durch dieses Signal vorgenommenen, groben Ausregelung von Schwankungen des Taktsignals in weiten Bereichen einstellen. Beispielsweise können damit die Signalübertragungseigenschaften im Taktsignalgenerator 14 zwischen dem Synchronisiereingang 13 und dem Taktsignalausgang 15 berücksichtigt werden.

In einer weiteren Abänderung der Schaltungsanordnung nach Fig. 1 enthält die Schaltungsanordnung gemäss Fig. 4 eine Referenzsignalquelle 100, die an einem Ausgang 101 ein digitales, mit der Frequenz des Referenzsignals periodisches Signal abgibt. Dieses wird, beispielsweise in der Form eines mehrstelligen Dualwortes, einem Referenzsignaleingang 102 eines zweiten Phasendetektors 103 zugeführt, der sich von dem zweiten Phasendetektor 52 der Schaltungsanordnung nach Fig. 1 dahingehend unterscheidet, dass er zwei mehrstellige Dualzahlen darstellende Signale miteinander vergleicht, während der zweite Phasendetektor 52 aus der Schaltungsanordnung nach Fig. 1 den Wert des amplitudendiskreten zweiten Steuersignals zum Zeitpunkt des Auftretens einer Flanke im rechteckförmigen Referenzsignal detektiert. Das von der Referenzsignalquelle 100 gelieferte, amplitudendiskrete Referenzsignal weist somit eine höhere Auflösung auf als das von der Referenzsignalquelle 45 abgegebene, rechteckförmige Referenzsignal. Es wird damit eine Erhöhung der Messgenauigkeit des zweiten Phasendetektors 103 gegenüber der Ausführung des zweiten Phasendetektors 52 aus der Schaltungsanordnung nach Fig. 1 erreicht. Damit lässt sich eine Erhöhung der Regelgeschwindigkeit des den zweiten Phasendetektor sowie das zweite Phasenrechenwerk 47 umfassenden Phasenregelkreises erreichen.

Eine höhere Auflösung des Referenzsignals kann beispielsweise dadurch erzielt werden, dass die aus dem Schwingquarz 44 abgeleitete Schwingung über einen Analog-Digital-Umsetzer mit einer gegenüber der Frequenz des Referenzsignals hohen Abtastrate dem zweiten Phasendetektor 103 zugeleitet wird. Eine andere Ausführungsform mit demgegenüber verringertem Schaltungsaufwand ist in der Fig. 5 dargestellt. Ein durch den Schwingquarz 44 gesteuerten Oszillator 130 schwingt auf einer Frequenz, die wenigstens nahezu dem Vierfachen der Frequenz des Farbsynchronsignals entspricht. Ein Signal mit dieser Frequenz wird am Ausgang 131 des Oszillators 130 abgegeben und einerseits unmittelbar einem ersten Eingang 132 sowie über einen ersten Teiler 133 einem zweiten Eingang 134 und über einen zweiten Teiler 135 einem dritten Eingang 136 eines dreiteiligen Registers 137 zugeführt. Das am Ausgang 131 abgegebene Signal ist vorzugsweise rechteckförmig, und jedes der drei jeweils einem der Eingänge 132, 134, 136 zugeordnete Teil des dreiteiligen Registers 137 speichert ein Bit. Dem dreiteiligen Register 137 wird ferner an einem Takteingang 138 das Taktsignal zugeführt. In jeder Periode des Taktsignals wird ein Augenblickswert der Signale an den Eingängen 132, 134 und 136 im dreiteiligen Register 137 gespeichert und an dessen Ausgang 139 in der Form eines dreistelligen Dualwortes abgegeben. Dieses wird in einer Multiplizieranordnung 140 mit einem vorgegebenen Faktor multipliziert und daraufhin über den Ausgang 101 der Referenzsignalquelle 100 an den Referenzsignaleingang 102 des zweiten Phasendetektors 103 geleitet.

Die Multiplizieranordnung 140 umfasst beispielsweise einen Multiplizierer 141, dem ausser dem Signal vom Ausgang 139 des dreiteiligen Registers 137 aus einem Speicher 142 ein konstanter Multiplikationsfaktor zugeführt wird und der beide miteinander multipliziert.

Eine besonders einfache Ausführung der Multiplizieranordnung 140 wird erhalten, wenn der Multiplikationsfaktor eine ganzzahlige Potenz der Dezimalzahl 2 ist. Eine Multiplikation mit einem derartigen Multiplikationsfaktor bedeutet lediglich ein Verschieben der Stellen einer Dualzahl um eine dem Exponenten der Zweierpotenz entsprechende Anzahl. Der Multiplizierer 141 besteht dann lediglich aus einer Hinzufügung einer entsprechenden Anzahl Leitungen für die gewünschte Anzahl der Stellen, während der Speicher 142 sich auf den Anschluss dieser Leitungen beispielsweise an Massepotential vereinfacht. Eine derartige Multiplizieranordnung 140 ist in der Fig. 6 dargestellt.

Der zweite Phasendetektor 103 nach Fig. 5 umfasst eine Subtrahierstufe 143, der einerseits vom Referenzsignaleingang 102 das Referenzsignal und andererseits vom Steuersignaleingang 51 das zweite Steuersignal zugeleitet werden und die eine Modulo-Subtraktion, d.h. eine Subtraktion ohne Berücksichtigung eines auftretenden Übertrags, durchführt. Wenn beispielsweise der Multiplikationsfaktor der Multiplizieranordnung 140 auf den Wert 32 festgelegt ist, hat das Referenzsignal am Referenzsignaleingang 102 die Form einer achtstelligen Dualzahl. Auch das zweite Steuersignal wird dann in der Form einer achtstelligen Dualzahl zugeführt, und die Differenz wird von der Subtrahierstufe 143 an ihrem Ausgang 144 ebenfalls in Form einer achtstelligen Dualzahl abgegeben. Die Subtrahierstufe 143 führt dann eine Modulo-($\pm128$)-Subtraktion aus.

Vom Ausgang 144 der Subtrahierstufe 143 wird das dort abgegebene Signal über ein rekursives Filter, bestehend aus einem Addierer 145, einem Register 146 sowie einer aus einem Multiplizierer 147 und einem Speicher 148 gebildeten Multiplizieranordnung 149 dem Ausgang 54 des zweiten Phasendetektors 103 zugeleitet. Das Register 146 wird durch das über einen Takteingang 150 zugeführte Taktsignal fortgeschaltet. Im vorliegenden Beispiel wird das Signal vom Ausgang des Registers 146 in der Multiplizieranordnung 149 mit dem Faktor 7/8 multipliziert. Das rekursive Filter 145 bis 149 dient zur Verminderung des sogenannten Quantisierungsrauschens, d.h. zur Erhöhung der Auflösung bzw. zur Verringerung von Sprüngen aufeinander folgender Werte in den verarbeiteten Signalen. Dabei muss die Bandbreite des rekursiven Filters 145 bis 149 so gross gewählt werden, dass durch sie die Regelgeschwindigkeit des den zweiten Phasendetektor 103 enthaltenden Phasenregelkreises nicht merklich beeinflusst wird.

Vom Ausgang 54 des zweiten Phasendetektors 103 wird das Referenzphasensignal in der Schaltungsanordnung nach Fig. 4 einem Eingang 110 einer Verzerrungsstufe 111 zugeführt. Die Verzerrungsstufe 111 umfasst beispielsweise einen Festwertspeicher mit einzelnen Speicherplätzen, in denen Werte eines am Ausgang 112 der Verzerrungsstufe 111 abzugebenden, gegenüber dem am Eingang 110 zugeführten Signal verzerrten Referenzphasensignals gespeichert sind. Die einzelnen Speicherplätze werden durch die Werte des Signals am Eingang 110 adressiert und der Wert des adressierten Speicherplatzes wird dem Ausgang 112 zugeführt. Dadurch ist eine beliebige, beispielsweise quadratische, Zuordnung zwischen den Werten am Eingang 110 und den Werten am Ausgang 112 möglich.

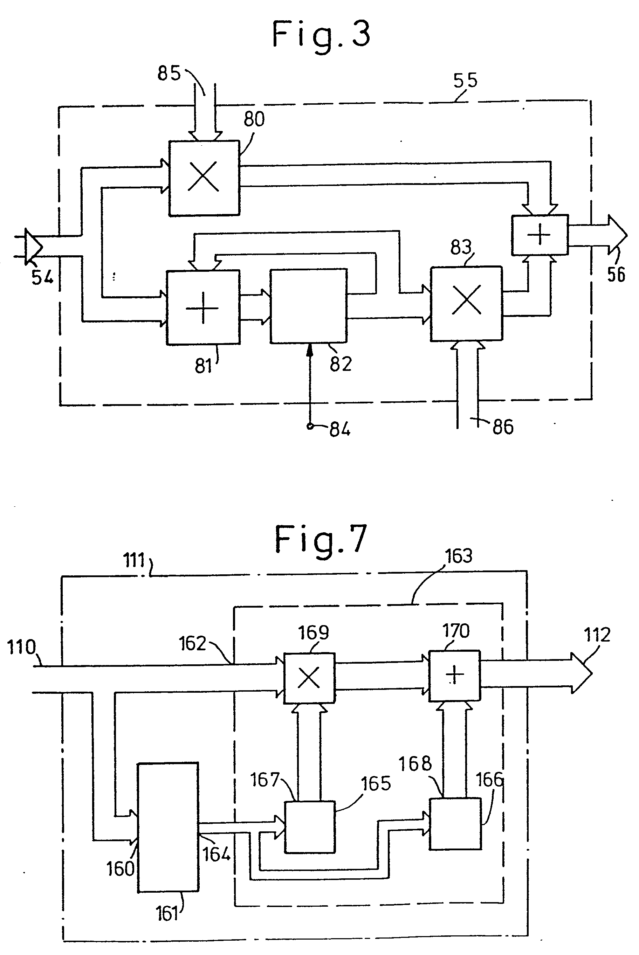

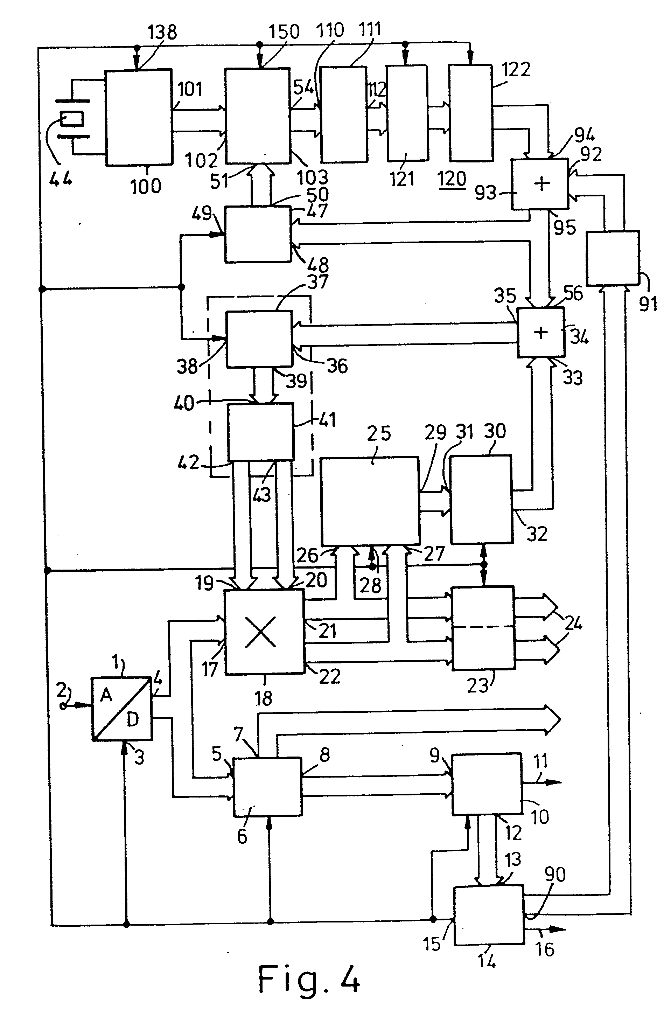

Ein weiteres Beispiel für eine Ausführungsform einer Verzerrungsstufe 111 ist in Fig. 7 dargestellt. In dieser Schaltung wird das Referenzphasensignal vom Eingang 110 einerseits einem Eingang 160 einer Quantisierstufe 161 und andererseits einem Referenzphasensignaleingang 162 einer Auswahlschaltung 163 zugeführt. In der Quantisierstufe 161 wird das Referenzphasensignal mit einer Anzahl von Schwellenwerten verglichen, durch die der gesamte Bereich der für das Referenzphasensignal möglichen Werte in eine entsprechende Anzahl von Wertebereichen unterteilt wird. Die Quantisierstufe 161 gibt an einem Ausgang 164 ein Signal ab, das den Wertebereich anzeigt, in den der gerade über den Eingang 110 der Verzerrungsstufe 111 zugeführte Wert des Referenzsignals fällt. Durch dieses Signal vom Ausgang 164 der Quantisierstufe 161 werden zwei in der Auswahlschaltung 163 enthaltene Speicherstufen 165 und 166 derart gesteuert, dass sie an Ausgängen 167 bzw. 168 je einen Signalwert abgeben. Die Auswahlschaltung 163 umfasst ferner einen Multiplizierer 169 und einen Addierer 170. Der Multiplizierer 169 multipliziert das ihm vom Referenzphasensignaleingang 162 der Auswahlschaltung 163 zugeleitete Referenzphasensignal mit dem vom Ausgang 167 der ersten Speicherstufe 165 zugeführten Signalwert, der somit die Steigung einer Kennlinie bestimmt, die die Zuordnung zwischen den Werten des Referenzphasensignals am Eingang 110 und denen am Ausgang 112 der Verzerrungsstufe 111 im jeweiligen Wertebereich darstellt. Das vom Multiplizierer 169 erzeugte, das Produkt des Referenzphasensignals vom Eingang 110 und des Signalwerts aus der ersten Speicherstufe 165 darstellende Signal wird im nachfolgenden Addierer 170 zu dem Signalwert aus der zweiten Speicherstufe 166 addiert und als zugeordneter Wert des Referenzphasensignals dem Ausgang 112 der Verzerrungsstufe 111 zugeführt. Mit der beschriebenen Verzerrungsstufe 111 ist es somit möglich, eine Zuordnung zwischen den Werten am Eingang 110 und am Ausgang 112 gemäss einer stetigen, bereichsweise linearen Kennlinie vorzunehmen. Selbstverständlich können mit der beschriebenen Anordnung auch unstetige Kennlinien realisiert werden.

Mit einer Verzerrungsstufe 111 in der Art der beschriebenen Beispiele wird vorzugsweise eine progressive Kennlinie zwischen den Werten des Referenzsignals am Eingang 110 und am Ausgang 112 eingestellt, da diese im Falle niedriger Werte für das Referenzphasensignal eine niedrige Regelverstärkung und damit eine niedrige Bandbreite und im Falle hoher Werte für das Referenzphasensignal eine hohe Regelverstärkung bewirkt. Dadurch ist bei geringen Phasenabweichungen eine genauere Korrektur von Phasenfehlern mit niedriger Regelgeschwindigkeit und bei grossen Phasenfehlern eine rasche, angenäherte Korrektur mit einer hohen Regelgeschwindigkeit möglich.

Die drei anhand der Fig. 4 beschriebenen Anordnungen zur Erhöhung der Regelgeschwindigkeit, nämlich zum einen die Zuführung eines die Frequenz des Taktsignals bestimmenden Signals über den zweiten Addierer 93, zum anderen die ein amplitudendiskretes Referenzsignal liefernde Referenzsignalquelle 100 und zum dritten die Verzerrungsstufe 111 lassen sich auch unabhängig voneinander und nicht nur gemeinsam, wie in Fig. 4 dargestellt, in der Schaltungsanordnung nach Fig. 1 vorsehen.

Die Schaltungsanordnung nach Fig. 4 weist weiterhin einen zweistufigen Referenzphasensignalregler 120 auf, der aus einer ersten und einer zweiten in Kette geschalteten Proportional-Integral-Regelstufe 121, 122 besteht. Jede der Stufen 121, 122, die im übrigen unabhängig voneinander sind, ist beispielsweise gemäss Fig. 3 aufgebaut.

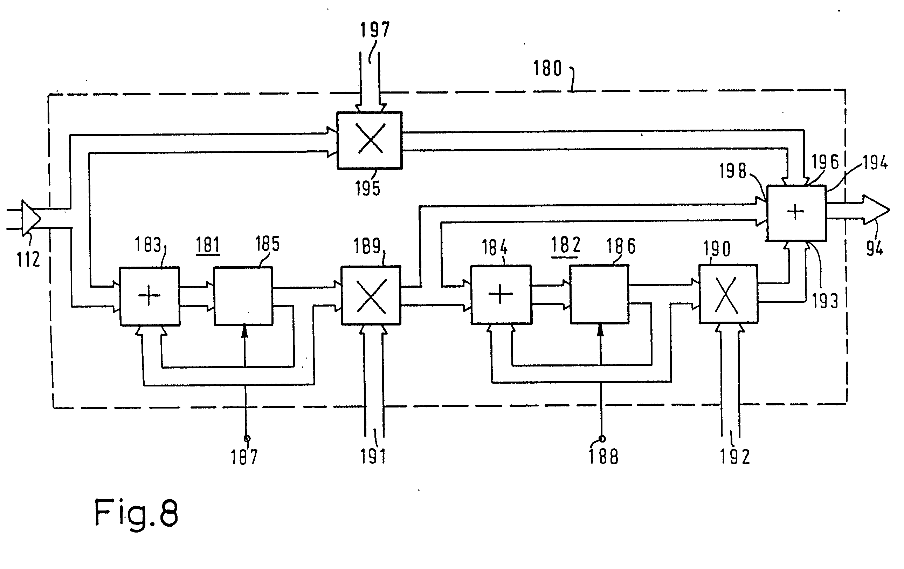

Anstelle des zweistufigen Referenzphasensignalreglers 120 in Fig. 4 wird vorteilhaft auch ein Referenzphasensignalregler 180 verwendet, wie er in Fig. 8 dargestellt ist. Er umfasst zwei Integratoren 181, 182, die in an sich bekannter Weise aus je einem Addierer 183, 184 und je einem Register 185, 186 in der Art von Akkumulationsvorrichtungen aufgebaut sind. Den Registern 185, 186 wird dazu an Takteingängen 187, 188 das Taktsignal zugeleitet. Jeder der Integratoren 181, 182 ist an seinem Ausgang mit einem Multiplizierer 189, 190 verbunden, in dem jedes Ausgangssignal der Integratoren 181, 182 mit je einem von über Eingänge 191, 192 zugeführten Proportionalitätsfaktoren multipliziert wird.

Das vom Ausgang 112 der Verzerrungsstufe 111 zugeführte Referenzphasensignal wird nun zum einen nacheinander über den ersten Integrator 181, den ersten Multiplizierer 189, den zweiten Integrator 182 und den zweiten Multiplizierer 190 einem ersten Eingang 193 eines Ausgangsaddierers 194 und ausserdem über einen dritten Multiplizierer 195 einem zweiten Eingang 196 des Ausgangsaddierers 194 zugeführt. Dem dritten Multiplizierer wird über einen Eingang 197 ein weiterer Proportionalitätsfaktor zugeleitet, mit dem das Signal vom Ausgang 112 der Verzerrungsstufe 111 multipliziert wird, bevor es dem zweiten Eingang 196 des Ausgangsaddierers 194 zugeleitet wird. Ausserdem wird dem Ausgangsaddierer 194 an einem dritten Eingang 198 das Signal vom Ausgang des ersten Multiplizierers 189 zugeleitet. Die Summe der Signale von den Eingängen 193, 196, 198 des Ausgangsaddierers 194 wird an den zweiten Eingang 94 des zweiten Addierers 93 weitergeleitet.

## Patentansprüche

1. Schaltungsanordnung zum Ableiten digitaler Farbsignale aus einem analogen Fernsehsignal mit
- einem Analog-Digital-Umsetzer (1), der aus dem analogen Fernsehsignal ein digitales Fernsehsignal bildet, das eine Folge amplitudendiskreter Abtastwerte des analogen Fernsehsignals umfasst mit einer durch ein Taktsignal bestimmten Folgefrequenz, die einem ganzzahligen Vielfachen der Zeilenfrequenz des Fernsehsignals entspricht,
- einem Demodulator (18), der durch Multiplikation des digitalen Fernsehsignals mit wenigstens einem digitalen Demodulationssignal die digitalen Farbsignale bildet,
- einem ersten Phasendetektor (25), der aus bestimmten digitalen Farbsignalen ein Farbphasensignal ableitet, das ein Mass für die Phasenlagen der digitalen Farbsignale relativ zueinander und/oder zu den Demodulationssignalen ist,
- einem ersten Phasenrechenwerk (37), das ein erstes Steuersignal abgibt, das aus einer Folge von Werten mit einer durch das Taktsignal bestimmten Folgefrequenz besteht und bei dem die Differenz jeweils zweier aufeinanderfolgender Werte durch das Farbphasensignal eingestellt wird,
- sowie eine Referenzschaltung (45, 47, 52, 55), die eine Referenzsignalquelle (45), einen ein Referenzphasensignal erzeugenden Phasendetektor (52) und ein zweites Phasenrechenwerk (47) umfasst, das ein zweites aus einer Folge von Signalwerten bestehendes Steuersignal abgibt, wobei die Differenz jeweils aufeinanderfolgender Signalwerte durch das Referenzphasensignal eingestellt wird, und die dem ersten Phasenrechenwerk (37) zum zusätzlichen Einstellen der Differenz zweier aufeinanderfolgender Werte des ersten Steuersignals das Referenzphasensignal zuleitet, dadurch gekennzeichnet, dass die Folge von Signalwerten des zweiten Steuersignals, des zweiten Phasenrechenwerkes (47) aus einer vom Taktsignal bestimmten Folgefrequenz besteht und dass der zweite Phasendetektor (52) das zweite Steuersignal mit dem von der Referenzsignalquelle (45) erzeugten Referenzsignal vergleicht und daraus das Referenzphasensignal bildet.

2. Schaltungsanordnung nach Anspruch 1, dadurch gekennzeichnet, dass das Referenzphasensignal vor dem Zuleiten zum ersten Phasenrechenwerk (37) dem Farbphasensignal additiv überlagert wird.

3. Schaltungsanordnung nach einem der vorhergehenden Ansprüche, wobei das Taktsignal in einem Taktsignal-Phasenregelkreis (14) aus einem Taktoszillator abgeleitet wird, dessen Schwingfrequenz durch ein aus dem Vergleich eines in dem analogen Fernsehsignal enthaltenen Zeilensynchronsignals mit dem frequenzgeteilten Taktsignal gewonnenes Frequenzsteuersignal bestimmt wird, dadurch gekennzeichnet, dass das Frequenzsteuersignal dem mindestens dem ersten Phasenrechenwerk (37) zugeführten Referenzphasensignal additiv überlagert wird.

4. Schaltungsanordnung nach einem der vorhergehenden Ansprüche, dadurch gekennzeichnet, dass das Referenzphasensignal dem ersten und dem zweiten Phasenrechenwerk (37 und 47) über einen Referenzphasensignalregler (55) zugeleitet wird.

5. Schaltungsanordnung nach Anspruch 4, dadurch gekennzeichnet, dass der Referenzphasensignalregler (55) eine Proportional-Integral-Regelstufe umfasst (Fig. 3).

6. Schaltungsanordnung nach Anspruch 4, dadurch gekennzeichnet, dass der Referenzphasensignalregler (180) eine Kettenschaltung von wenigstens zwei Integratoren (181, 182), denen wenigstens ein Proportionalzweig parallelgeschaltet ist, umfasst.

7. Schaltungsanordnung nach Anspruch 4, 5 oder 6, dadurch gekennzeichnet, dass das Referenzphasensignal einem Eingang (110) einer Verzerrungsstufe (111) und deren Ausgangssignal (112) dem Referenzphasensignalregler (55, 120) zugeführt wird und dass die Verzerrungsstufe (111) das Referenzphasensignal derart umformt, dass grosse Werte des Referenzphasensignals gemäss einer nichtlinearen Zuordnung zwischen Werten am Eingang (110) und Ausgang (112) überproportional gegenüber kleinen Werten vergrössert werden.

8. Schaltungsanordnung nach Anspruch 7, dadurch gekennzeichnet, dass die Verzerrungsstufe (111) eine Speicheranordnung umfasst, die zu jedem Wert des Referenzphasensignals am Eingang (110) einen Wert am Ausgang (112) der Verzerrungsstufe (111) bildet und diesen dem Referenzphasensignalregler (55, 120) zuleitet.

9. Schaltungsanordnung nach Anspruch 7, dadurch gekennzeichnet, dass die Verzerrungsstufe (111) eine Quantisierstufe (161) umfasst, die Werte des Referenzphasensignals mit einem oder mehreren Schwellenwerten vergleicht, sowie eine von der Quantisierstufe (161) gesteuerte Auswahlschaltung (163), die ihrem Eingang (162) zugeführte Werte des Referenzphasensignals in einzelnen, durch den oder die Schwellenwerte begrenzten Wertebereichen gemäss einer linearen Zuordnung in Werte umsetzt, die vom Ausgang (112) der Verzerrungsstufe (111) dem Referenzphasensignalregler (55, 120) zugeführt werden.

10. Schaltungsanordnung nach einem der vorhergehenden Ansprüche, dadurch gekennzeichnet, dass die Referenzsignalquelle (45) ein rechteckförmiges Signal abgibt, das mit einem vom Taktsignal gesteuerten Register abgetastet wird.

11. Schaltungsanordnung nach einem der vorhergehenden Ansprüche 1 bis 9, dadurch gekennzeichnet, dass die Referenzsignalquelle (100) einen Oszillator (130) umfasst, der eine Schwingung abgibt mit einer Frequenz, die einem ganzzahligen Vielfachen der Frequenz des Referenzsignals entspricht, sowie eine Umsetzschaltung (133, 135, 137, 140), die die Schwingung des Oszillators (130) in ein amplitudendiskretes, mit der Frequenz des Referenzsignals periodisches Signal umsetzt.

12. Schaltungsanordnung nach einem der vorhergehenden Ansprüche, dadurch gekennzeichnet, dass die Frequenz des Referenzsignals wenigstens nahezu gleich der Frequenz des Farbsynchronsignals des Fernsehsignals ist.

**Revendications**

1. Montage de circuit pour dériver des signaux de couleur numériques d'un signal de télévision analogique comportant:
- un convertisseur analogique-numérique (1) qui, à partir du signal de télévision analogique, forme un signal de télévision numérique comprenant une suite de valeurs d'échantillonnage discrètes en amplitude du signal de télévision analogique à une fréquence de répétition déterminée par un signal d'horloge, qui correspond à un multiple entier de la fréquence de ligne du signal de télévision,
- un démodulateur (18) qui, par multiplication du signal de télévision numérique par au moins un signal de démodulation numérique, forme les signaux de couleur numériques,
- un premier détecteur de phase (25) qui, à partir de signaux de couleur numériques déterminés, dérive un signal de phase de couleur constituant une mesure pour les positions de phase des signaux de couleur numériques entre eux et/ou par rapport aux signaux de démodulation,
- un premier calculateur de phase (37) qui fournit un premier signal de commande constitué d'une suite de valeurs à une fréquence de répétition déterminée par le signal d'horloge et pour lequel la différence entre chaque fois deux valeurs successives est réglée par le signal de phase de couleur,
- ainsi qu'un circuit de référence (45, 47, 52, 55) qui comprend une source de signal de référence (45), un détecteur de phase (52) produisant un signal de phase de référence et un deuxième calculateur de phase (47) qui fournit un deuxième signal de commande constitué d'une suite de valeurs de signaux, la différence entre des valeurs de signaux successives étant réglée par le signal de phase de référence, et qui applique au premier calculateur de phase (37) le signal de phase de référence en vue du réglage supplémentaire de la différence de deux valeurs successives du premier signal de commande, caractérisé en ce que la suite de valeurs de signal du deuxième signal de commande du deuxième calculateur de phase (47) est constituée d'une fréquence de répétition déterminée par le signal d'horloge et que le second détecteur de phase (52) compare le second signal de commande au signal de référence produit par la source de signal de référence (45) et en dérive le signal de phase de référence.

2. Montage de circuit suivant la revendication 1, caractérisé en ce que le signal de phase de référence est superposé de manière additive au signal de phase de couleur avant d'être appliqué au premier calculateur de phase (37).

3. Montage de circuit suivant l'une quelconque des revendications précédentes, dans lequel le signal d'horloge dans un circuit de régulation de phase de signal d'horloge (14) est dérivé d'un oscillateur d'horloge dont la fréquence d'oscillation est déterminée par un signal de commande de fréquence obtenu par comparaison d'un signal de synchronisation de ligne contenu dans le signal de télévision analogique et du signal d'horloge divisé en fréquence, caractérisé en ce que le signal de commande de fréquence est superposé de manière additive au signal de phase de référence appliqué au moins au premier calculateur de phase (37).

4. Montage de circuit suivant l'une quelconque des revendications précédentes, caractérisé en ce que le signal de phase de référence est appliqué au premier et au second calculateur de phase (37 et 47) par l'intermédiaire d'un régulateur de signal de phase de référence (55).

5. Montage de circuit suivant la revendication 4, caractérisé en ce que le régulateur de signal de phase de référence (55) comprend un étage de régulation proportionnelle-intégrale (Fig. 3).

6. Montage de circuit suivant la revendication 4, caractérisé en ce que le régulateur de signal de phase de référence (180) comprend un réseau récurrent d'au moins deux intégrateurs (181, 182) auxquels au moins une branche proportionnelle est connectée en parallèle.

7. Montage de circuit suivant la revendication 4, 5 ou 6, caractérisé en ce que le signal de phase de référence est appliqué à une entrée (110) d'un étage de distorsion (111) dont le signal de sortie (112) est appliqué au régulateur de signal de phase de référence (55, 120) et que l'étage de distorsion (111) convertit le signal de phase de référence d'une manière telle que de grandes valeurs du signal de phase de référence soient accrues selon une association non linéaire entre des valeurs à l'entrée (110) et à la sortie (112) d'une manière surproportionnelle par rapport à de petites valeurs.

8. Montage de circuit suivant la revendication 7, caractérisé en ce que l'étage de distorsion (111) comporte un dispositif de stockage qui, à chaque valeur du signal de phase de référence à l'entrée (110), forme une valeur à la sortie (112) de l'étage de distorsion (111) et l'applique au régulateur de signal de phase de référence (55, 120).

9. Montage de circuit suivant la revendication 7, caractérisé en ce que l'étage de distorsion (111) comprend un étage de quantification (161) qui compare des valeurs du signal de phase de référence à une ou plusieurs valeurs de seuil, ainsi qu'un circuit de sélection (163) commandé par l'étage de quantification (161), qui convertit des valeurs du signal de phase de référence appliquées à son entrée (162), dans des domaines de valeurs individuels limités par la ou les valeurs de seuil, selon une association linéaire, en des valeurs qui sont appliquées de la sortie (112) de l'étage de distorsion (111) au régulateur de signal de phase de référence (55, 120).

10. Montage de circuit suivant l'une quelconque des revendications précédentes, caractérisé en ce que la source de signal de référence (45) produit un signal rectangulaire qui est échantillonné à l'aide d'un registre commandé par le signal d'horloge.

11. Montage de circuit suivant l'une quelconque des revendications 1 à 9, caractérisé en ce que la source de signaux de référence (100) comprend un oscillateur (130) qui fournit une oscillation à une fréquence correspondant à un multiple entier de la fréquence du signal de référence, ainsi qu'un circuit de conversion (133, 135, 137, 140) qui convertit l'oscillation de l'oscillateur (130) en un signal périodique discret en amplitude à la fréquence du signal de référence.

12. Montage de circuit suivant l'une quelconque des revendications précédentes, caractérisé en ce que la fréquence du signal de référence est au moins à peu près égale à la fréquence du signal de synchronisation de couleur du signal de télévision.

**Claims**

1. A circuit arrangement for deriving digital colour signals from an analog television signal with –
an analog/digital converter (1) which forms from the analog television signal a digital television signal which comprises a sequence of discrete-amplitude samples of the analog television signal having a repetition frequency determined by a clock signal which corresponds to a whole multiple of the line frequency of the television signal,
– a demodulator (18) which forms the digital colour signals by multiplication of the digital television signal, by at least a digital demodulation signal,
– a first phase detector (25) which derives from certain digital colour signals a colour phase signal which is a measure of the phase positions of the digital colour signals relative to one another and/or to the demodulation signals,
– a first phase calculator (37) that delivers a first control signal which consists of a sequence of values having a repetition frequency determined by a clock signal and whereby the difference between every two successive values is adjusted by the colour phase signal,
– and a reference circuit (45, 47, 52, 55) which comprises a reference signal source (45), an phase detector (52) that generates a reference phase signal, and a second phase calculator (47) that delivers a second control signal consisting of a sequence of signal values, whereby the difference between every two consecutive signal values is adjusted by the reference phase signal, and which applies the reference phase signal to the first phase calculator (37) for additional adjustment of the difference between two consecutive values of the first control signal, characterized in that the sequence of the values of the second control signal from the second phase calculator (47) consists of a sequence whose frequency is determined by the clock signal, and in that the second phase detector (52) compares the second control signal with the reference signal generated by the reference signal source (45) and forms therefrom the reference phase signal.

2. A circuit arrangement as claimed in Claim 1, characterized in that the reference phase signal is additively superimposed on the colour phase signal before being applied to the first phase calculator (37).

3. A circuit arrangement as claimed in either one of the foregoing Claims, characterized in that the clock signal is derived from a clock oscillator in a clock signal phase control circuit (14) whose oscillation frequency is determined by a frequency-controlled signal obtained from the comparison of a line synchronizing signal contained in the analog television signal with the frequency-divided clock signal, characterized in that the frequency controlled signal is additively superimposed on the reference phase signal fed to at least the first phase calculator (37).

4. A circuit arrangement as claimed in any one of the foregoing Claims, characterized in that the reference phase signal is fed to the first and to the second phase calculator (37 and 47) via a reference phase signal controller (55).

5. A circuit arrangement as claimed in Claim 4, characterized in that the reference phase signal controller (55) comprises a proportional-integral control stage (Fig. 3).

6. A circuit arrangement as claimed in Claim 4, characterized in that the reference phase signal controller (180) contains a chain network of at least two integrators (181, 182) with which at least a proportional branch is connected in parallel.

7. A circuit arrangement as claimed in Claims 4, 5 or 6, characterized in that the reference signal is fed to an input (110) of a distortion stage (111) whose output signal (112) is fed to the reference phase signal controller (55, 120) and in that the distortion stage (111) so distorts the reference phase signal that large values of the reference phase signal are increased in accordance with a nonlinear arrangement between values at the input (110) and output (112) more than proportionally compared with small values.

8. A circuit arrangement as claimed in Claim 7, characterized in that the distortion stage (111) contains a storage device which for every value of the reference phase signal at the input (110) forms a value at the output (112) of the distortion stage (111) and feeds this to the reference phase signal controller (55, 120).

9. A circuit arrangement as claimed in Claim 7, characterized in that the distortion stage (111) comprises a quantiser stage (161) which compares the values of the reference phase signal with one or more threshold values, and a selector circuit (163) controlled by the quantiser stage (161) which converts values of the reference phase signal, individually limited by the threshold value or values in accordance with a linear arrangement and which are fed to its input (162), into values which are fed from the output (112) of the distortion stage (111) to the reference phase signal controller (55, 120).

10. A circuit arrangement as claimed in one or more of the Claims 3 to 10, characterized in that the reference signal source (45) delivers a square-wave signal which is sampled by a register controlled by the clock signal.

11. A circuit arrangement as claimed in one or more of the Claims 1 to 9, characterized in that the reference signal source (100) comprises an oscillator (13) which delivers an oscillation with a frequency that corresponds to a whole multiple of the frequency of the reference signal, and a converter (133, 135, 137, 140) which converts the oscillation of the oscillator (130) into a periodic signal of discrete amplitude and has the frequency of the reference signal.

12. A circuit arrangement as claimed in one or more of the foregoing Claims, characterized in that the frequeny of the reference signal is at least almost equal to the frequency of the colour synchronizing signal of the television signal.

Fig.1

Fig.2

Fig.5

Fig.6

# Fig.3

# Fig.7

Fig. 4

Fig.8